(19) Europäisches Patentamt

European Patent Office

Office européen des brevets

(11) EP 1 679 676 A1

(12) EUROPEAN PATENT APPLICATION

(43) Date of publication:
12.07.2006 Bulletin 2006/28

(51) Int Cl.:
G09G 1/04 (2006.01)   H04N 3/233 (2006.01)

(21) Application number: 05112014.5

(22) Date of filing: 13.12.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 06.01.2005 FR 0550038

(71) Applicant: Thomson Licensing
92100 Boulogne-Billancourt (FR)

(72) Inventors:
• Bellanger, Jean-Luc
92648 Boulogne Cedex (FR)
• Petit, Serge
92648 Boulogne Cedex (FR)
• Rivero, Daniel
92648 Boulogne Cedex (FR)

(74) Representative: Le Dantec, Claude
Thomson,
46, Quai Alphonse Le Gallo
92100 Boulogne-Billancourt (FR)

(54) **Image processing method for correcting the distortions of a cathode-ray tube**

(57)  The present invention relates to an image processing method intended for correcting the distortions created by the instability of the high-voltage supply circuit in a cathode-ray tube display device. The corrections are made to the video content of the images to be displayed. They consist in characterizing (11) the image distortions created by the high-voltage supply circuit of the cathode-ray tube, then in determining (12), for each of the images to be displayed, the distortions affecting them, and finally in generating (13) precorrected images having the reverse distortions. According to the invention, to characterize the distortions created by the high-voltage supply circuit, a model capable of delivering, as a function of the video signal (R,G,B) of the images to be displayed, a signal representative of the variations in the output voltage (VHV) of the high-voltage supply circuit while these images are being displayed.

FIG.6

**Description**

The present invention relates to an image processing method for correcting the distortions in a cathode-ray tube.

The quality and the performance of a television are generally measured according to geometry, convergence and registration criteria. The level of performance reached at the present time is satisfactory, but with the arrival of high-definition television and new screen technologies (LCD, plasma, OLED, etc.), this level must be further improved, while reducing the cost of the product.

The performance level of logic and analogue electronic components is now such that it is possible to carry out millions of arithmetic and logic operations per second. Within this context, low-cost processing of high-frequency video signals becomes possible, these being precorrected so as to compensate for defects in cathode-ray tubes and thus improving their performance and their cost.

One of the geometrical defects, which is partly corrected on current chassis, is the defect called "breathing" that arises from variations in the very high-voltage (hereafter called VHV) supply of the television. This defect stems from the fact that the high-voltage supply of current chassis is not regulated. The variations in the amplitude of the VHV are a function of the video content. These variations in the VHV modify the conditions for accelerating the electron beams in the tube and thus create variations in the geometry of the image.

The geometrical variations are compensated for in current chassis by electronic circuits that act in particular on the signals for controlling the East/West correction electronics and the frame scan. It is also possible to replace these "electronic" compensations with digital corrections made directly on the video content, these being more effective and less expensive.

Digital corrections of the video content generally consist in characterizing the image distortions created by the VHV supply of the cathode-ray tube, then in determining, for each of the images to be displayed, the distortions that affect them, and finally in generating precorrected images having the reverse distortions.

At the present time, to characterize the short-term distortions of images generated by the VHV supply, the solution consists in employing a capacitive divider between the low point of the anode capacitor of the cathode-ray tube and ground. The main drawback of this method is that the low point of the anode capacitor of the cathode-ray tube is then no longer a neutral point of the chassis. It is then necessary to add additional functions in order to protect the tube against the risk of arcing, which increases the cost of the television. The use of a resistive divider bridge directly on the anode of the tube is also conceivable in order to recover the AC and DC components of the VHV, but this also incurs an additional cost of the television, as these are very high-voltage resistors.

Another possibility would consist in using a signal representative of the beam current of the tube and to process it so that it can give a true representation of the value of the VHV.

However, all these solutions have the drawback of observing the value of the VHV *a posteriori* - the variations in the VHV are in fact measured at the moment when the image is displayed. In addition, in the case of video processing, there is necessarily a delay between processing an image and displaying this same image. The value of the VHV that has to be known for correctly preprocessing the image is that which will be effective during display of this image.

The present invention aims to alleviate this drawback. According to the invention, the method of the invention includes a step of predicting the value of the VHV in order to determine in advance, for each image, the value of the VHV at the moment this image is displayed and then to determine the appropriate precorrected image.

The present invention relates to a method of processing a sequence of video images to be displayed with a cathode-ray tube display device, which method is intended for correcting the distortions created by the high-voltage supply circuit of the display device and comprises the following steps :

- characterization of the distortions created by the high-voltage supply circuit of the display device; and
- for each image of the sequence to be displayed, determination of the distortions affecting it and generation of a precorrected image having the reverse distortions,

characterized in that a model for characterizing the distortions created by the high-voltage supply circuit is defined, said model being capable of delivering, as a function of the video signal of the images to be displayed, a signal representative of the variations in the output voltage of the high-voltage supply circuit while these images are being displayed.

The signal representative of the variations in the output voltage of the high-voltage supply circuit have a low-frequency component VHV_DC and a high-frequency component VHV_AC.

The low-frequency component VHV_DC is calculated either on the basis of a grid voltage intended to bias a grid of the cathode-ray tube gun or on the basis of a beam signal representative of the cathode-ray tube beam current.

To calculate the high-frequency component VHV_AC, the charge current and the discharge current of the cathode-ray tube capacitor of the display device for each image line are defined by modelling and then the high-frequency component is calculated by summing, for each line, the voltages obtained by integrating the charge current and the discharge current.

In a first embodiment, the charge current and the discharge current of the cathode-ray tube capacitor are modelled on the basis of the video image signal and of the grid voltage for said images.

In a second embodiment, the charge current is determined in another way. It is measured in a resistor in the base of the cathode-ray tube while the capacitor of the tube is being charged up.

The invention will be better understood on reading the description that follows, given by way of non-limiting example and with reference to the appended drawings in which:

- Figure 1 is a circuit diagram of a diode split transformer DST used conventionally to generate the VHV;
- Figure 2 is an equivalent circuit of the transformer connected to the cathode-ray tube during a discharge phase when the video signals are displayed;
- Figure 3 is an equivalent circuit of the transformer connected to the cathode-ray tube during a line flyback pulse;
- Figure 4 shows the change in line scan voltage, the VHV and the cathode current of the tube during display of several lines of an image;
- Figure 5 shows a diagram illustrating a preferred way of generating the VHV on the basis of a low-frequency component VHV_DC and a high-frequency component VHV_AC; and
- Figure 6 shows the steps of the method of the invention.

According to the invention, it is proposed to predict the VHV variations so as to be able to determine the distortions that will affect the images while they are being displayed. The video signals R,G,B are used. These predictions are made on the basis of a mathematical model for determining the VHV supplied to the tube during display of an image on the basis of the values of the RGB signals of this image. This model simulates the operation of the diode split transformer (hereafter referred to as DST) usually responsible for supplying the tube with the VHV. This model can predict the VHV on one or more frames according to the desired precision. It is representative of the short-term/medium-term behaviour (of a few lines to a few frames) of the VHV and a measurement of a long-term component may be used to reset the value of the VHV after a few frames. It is therefore possible with this model to predict the variations in the VHV and then to integrate, by anticipation, the geometrical corrections needed in the images to be displayed.

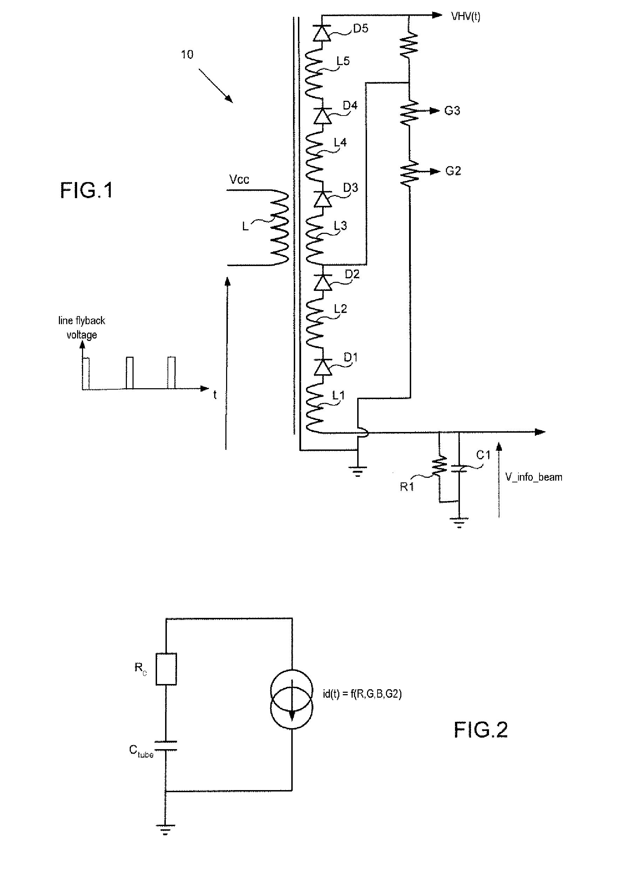

Before explaining the method of the invention in further detail, the circuit diagram of a DST conventionally used to generate the VHV will be briefly described. Such a circuit diagram is shown in Figure 1.

The diode split transformer, with the reference 10, is a transformer currently employed for raising the voltage. The primary winding is a coil of inductance L that receives, at its terminals, a supply voltage Vcc and the line flyback voltage signal. The secondary winding is made up of a plurality of series-connected windings L1 to L5 separated by diodes D1 to D5. Each secondary winding sees the same flux and therefore the same secondary voltage. By connecting several windings in series it is possible to limit the reverse voltage of the diodes and thus achieve very high output voltages (of the order of around thirty kilovolts) with diodes whose reverse voltage is only a few kilovolts (of around 8 kV). The secondary winding delivers the VHV and, on intermediate outputs, lower voltages G2 and G3 that are obtained by potential division of the VHV and are intended to supply the grids, commonly called G2 and G3 of the tube's gun.

A voltage V_info_beam, representative of the average current of the beam in the cathode-ray tube, is possibly available on another output of the transformer. This voltage is obtained using an integrator circuit consisting of a resistor R1 connected in parallel with a capacitor C1 and connected between said output and a reference potential.

The modelling of the VHV on the basis of the video signals will now be described.

Fourier decomposition as a Fourier series can in general be applied to periodic signals. However, any information varying over the course of a specific time interval may always be decomposed into the sum of a low-frequency (DC) component and a high-frequency (AC) component. Since image refreshment of a television is periodic, this amounts to summing, in the case of the VHV, a continuous component VHV_DC, representing the average value of the VHV over a few images, with a variable component VHV_AC, representing the instantaneous change in the VHV over these same images.

The VHV can therefore be expressed on the basis of a Fourier series decomposition in the following manner:

$$VHV(t) = a_0 + \sum_{1}^{3}\left(a_n\cos(n\omega t) + b_n\sin(n\omega t)\right) + \sum_{4}^{\infty}\left(a_n\cos(n\omega t) + b_n\sin(n\omega t)\right)$$

where:

- the low-frequency component VHV_DC(t) is equal to:

$$VHV\_DC(t) = a_0 + \sum_{1}^{3}(a_n \cos(n\omega t) + b_n \sin(n\omega t)),$$

and
- the high-frequency component VHV_AC(t) is equal to:

$$VHV\_AC(t) = \sum_{4}^{\infty}(a_n \cos(n\omega t) + b_n \sin(n\omega t)).$$

The low-frequency component VHV_DC(t) is the long-term component which serves to reset the predicted value of the VHV all the n video frames, n being for example 2 or more. This component does not depend directly on the current video signal R,G,B.

**Calculation of the component VHV_DC(t)**

The component VHV_DC(t) may be obtained:

- from the voltage signal used to bias the grid G2 of the cathode-ray tube gun; or
- from the beam current of the tube, information obtained from the signal V_info_beam.
  These two signals exhibit long-term variations and can therefore be measured on frames prior to the current frame.

The component VHV_DC(t) may thus be modelled by a second-order polynomial of the type $ax^2 + bx + c$ where x = V_info_beam or G2. If the precision is not high enough, this polynomial may be supplemented with a first-order differential term. For example, for a gun of the vector type having a voltage G2 of between 870 volts and 950 volts and for x = G2, the following coefficients are obtained:

$$a = 7.96 \times 10^{-2};$$

$$b = -114;$$

$$c = 68505.$$

For x = V_info_beam of between 1.6 volts and 6.5 volts, the following results are obtained:

$$a = 13.76;$$

$$b = 73.24;$$

$$c = 30305.$$

Of course, these values are given merely by way of example.

**Calculation of the component VHV_AC(t)**

Likewise, the component VHV_AC(t) may be obtained in two different ways:

(1) by modelling the charging and discharging of the cathode-ray tube capacitor with, as input signals, the R,G,B video signals and the G2 signal - the prediction is then possible on at least one frame; or
(2) by measuring the charge current in the base of the tube and by calculating the discharge current with, as input signals, the R,G,B and G2 signals - in this case, the prediction is possible on a line.

(1) Modelling the charging and discharging of the cathode-ray tube capacitor

On the scale of a scan line, the change in VHV may be decomposed into two phases:

(1.1) a discharge phase during which the video signal is displayed. During this phase, the tube gun emits electrons and the tube capacitor discharges. There is no line flyback pulse and the diodes of the transformer 10 are blocked. During this phase, the equivalent circuit of the cathode tube is illustrated as in Figure 2. This circuit includes a resistor $R_c$ representing the resistance of the graphite layer bonded to the inner and outer surfaces of the cathode-ray tube. This resistor is commonly called a "coating" resistor and is connected in series with the tube capacitor $C_{tube}$ and a current source that delivers a discharge current $i_d(t) = f(R,G,B,G2)$. The current source models the current in the tube gun, the overall current $i_d(t)$ is the sum of the currents in the three cathodes, each dedicated to displaying one of the video signals R, G, B. The equation for the discharge current $i_d(t)$ for each of these cathodes has the form $a'x^4 + b'x^3 + c'x^2 + d'x + e$ where x is the cathode voltage reduced by the voltage needed for its conduction (usually called the "cut-off" voltage). The coefficients a', b', c', d' and e' are 2nd-order polynomial functions of the voltage G2 and they differ for each cathode.

For example, for a gun of the type given above, the following coefficients are obtained:

- for the red cathode:

$$a = 5.5645 \times 10^{-11}\, G2 - 4.9243 \times 10^{-8}$$

$$b = 4.0903 \times 10^{-12}\, G2^2 - 1.6116 \times 10^{-8}\, G2 + 1.2863 \times 10^{-5}$$

$$c = -9.2248 \times 10^{-10}\, G2^2 + 2.4397 \times 10^{-6}\, G2 - 1.4332 \times 10^{-3}$$

$$d = 3.4105 \times 10^{-8}\, G2^2 - 7.6526 \times 10^{-5}\, G2 + 4.6775 \times 10^{-2}$$

$$e = -8.6611 \times 10^{-8}\, G2^2 + 1.6928 \times 10^{-4}\, G2 - 7.4740 \times 10^{-2};$$

- for the green cathode:

$$a = -2.6650 \times 10^{-11}\, G2 + 2.7656 \times 10^{-8}$$

$$b = 1.3988 \times 10^{-11}\, G2^2 - 2.5156 \times 10^{-8}\, G2 + 1.2612 \times 10^{-5}$$

$$c = -1.1522 \times 10^{-9}\, G2^2 + 2.0234 \times 10^{-6}\, G2 - 8.4536 \times 10^{-4}$$

$$d = 3.2522 \times 10^{-8}\, G2^2 - 6.1800 \times 10^{-5}\, G2 + 3.4496 \times 10^{-2}$$

$$e = -3.6885 \times 10^{-8}\, G2^2 + 8.0765 \times 10^{-5}\, G2 - 3.5027 \times 10^{-2};$$

-   and for the blue cathode:

$$a = -4.7213 \times 10^{-11}\, G2 + 4.6983 \times 10^{-8}$$

$$b = 1.0741 \times 10^{-11}\, G2^2 - 1.4188 \times 10^{-8}\, G2 + 5.3592 \times 10^{-6}$$

$$c = -1.2328 \times 10^{-9}\, G2^2 + 1.8090 \times 10^{-6}\, G2 - 5.7286 \times 10^{-4}$$

$$d = 3.8850 \times 10^{-8}\, G2^2 - 6.5259 \times 10^{-5}\, G2 + 3.1976 \times 10^{-2}$$

$$e = -1.0422 \times 10^{-7}\, G2^2 + 1.9519 \times 10^{-4}\, G2 - 7.8503 \times 10^{-2}.$$

As indicated above, the voltage G2 is considered as being constant in the short term and can be measured on the frames or lines prior to the current frame or line.

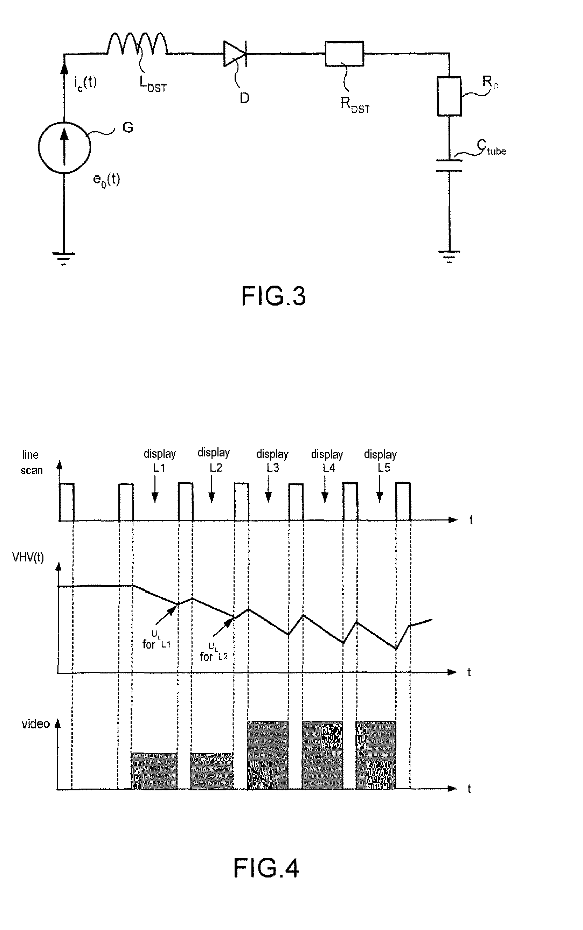

(1.2) a charging phase during which the video signal is not displayed and the line flyback pulse recharges the tube capacitor; the diodes of the transformer 10 are turned on when the line flyback pulse, which is amplified by the transformer 10, exceeds the voltage level at the terminals of the tube capacitor. During this phase, the equivalent circuit of the cathode-ray tube is illustrated by Figure 3. It comprises six elements connected in series:

-   a voltage source G delivering a signal $e_0(t) = E_0 \sin \omega t$ representing the line flyback signal amplified by the turns ratio of the transformer 10;
-   an inductor $L_{DST}$ representing the inductance of the transformer 10 seen from the output thereof;
-   a resistor $R_{DST}$ representing the resistance of the transformer 10 seen from the output thereof;
-   the "coating" resistor $R_c$;
-   the capacitor $C_{tube}$ representing the capacitance of the cathode-ray tube; and
-   a diode D for letting the current flow from the generator $e_0(t)$ to the capacitor of the tube.

The timing diagrams shown in Figure 4 describe several consecutive charging and discharging phases over a series of video lines having a constant level. This figure shows, for this series of lines, the line scan voltage, the voltage VHV(t) and the video level displayed on these lines.

The equation for the charge current for a line L is:

$$i_c(t) = i_c(t - t_1) - i_c(t - t_2)$$

where

$$t_1 = \frac{1}{\omega} \arcsin(\frac{U_L}{E_0})$$

and

$$t_2 \cong \frac{T}{2} - t_1$$

and

$$i_c(t - \alpha) = \left( \frac{E_0}{\omega} \left( \omega \cos(\omega(t + \alpha)) + \sin(\omega \, \alpha) \right) - \frac{U_L}{R} \right) \times \left( e^{-\lambda_1 t} - e^{-\lambda_2 t} \right)$$

where:

- $\times$ is a convolution product;
- $E_0$ is the no-load voltage of the transformer 10 - it may be modulated by an East/West tube scan correction signal;
- $U_L$ is the tube capacitor charge voltage before the line flyback;
- $\omega = 2\pi/T$, where T is the line period;
- $R = R_{DST} + R_c$; and
- 

$$\lambda_1 = \frac{R + \sqrt{R^2 - R_a{}^2}}{2L_{DST}} \; ;$$

$$\lambda_2 = \frac{R - \sqrt{R^2 - R_a{}^2}}{2L_{DST}}$$

where

$$R_a = 2\sqrt{\frac{L_{DST}}{C}} \; .$$

The component VHV_AC(t) is the sum, for each line period, of the voltages obtained by integrating the charge current $i_c(t)$ and the discharge current $i_d(t)$ passing through the tube capacitor.

Modelling by measurement of the charge current in the base of the tube and by calculation of the discharge current

If the measured value of the charge current in the base of the tube is used, a resistor is placed in the base of the tube in order to pick up the charge information during the charging phase of the line period. As regards the discharge current, this is calculated as described in (1.1).

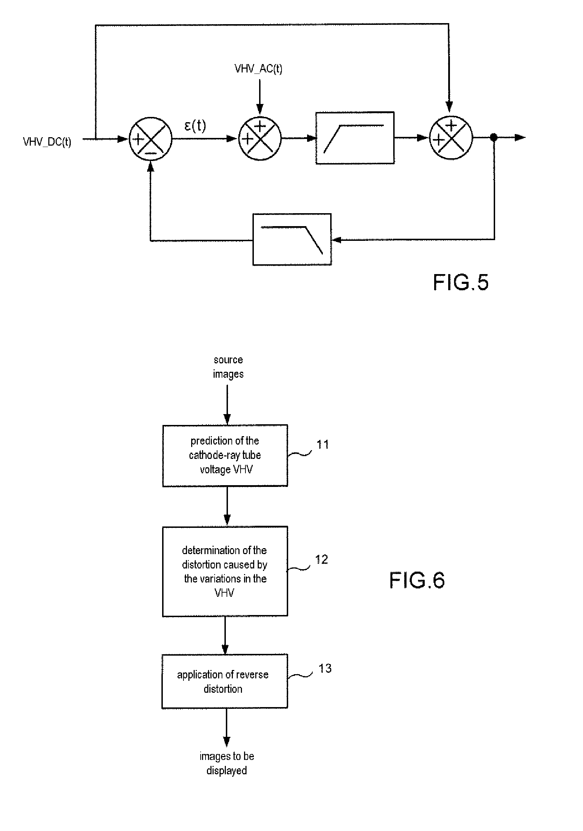

Whatever the solution adopted for calculating the AC component, the calculations requiring successive integrations run the risk of picking up errors. To prevent this risk of divergence, it is advantageous to provide a correction. The idea adopted, the principle of which is shown diagrammatically in Figure 5, is to correct the component VHV_AC(t) with a correction signal ε(t) before it is added to the component VHV_DC(t). This correction signal ε(t) is the result of comparing the component VHV_DC(t) with the final signal VHV(t) filtered beforehand by a low-pass filter. Likewise, the signal VHV_AC(t) + ε(t) is filtered by a high-pass filter before it is added to the component VHV_DC(t). The high-pass filter defines the bandwidth of the AC component and the low-pass filter defines that of the DC component. The common frequency band defines the active correction range.

Thus, according to the invention, the voltage VHV delivered by the transformer 10 is predicted for each image of the sequence to be displayed.

The distortions affecting the images to be displayed, which occur at the moment when these are displayed, may be predicted. For example, if the variation in the voltage VHV creates a local zoom or an overall zoom of the image at the moment of its display, it is possible to predict this zoom from the predicted voltage VHV. Next, the video data of the image is modified in order that the latter includes the inverse zoom. This inverse zoom introduced into the video data can be used to compensate for the distortions introduced by the variations in the VHV. These steps are shown in Figure 6.

Referring to Figure 6, the source images to be displayed are firstly processed in a step 11 in order to predict the VHV delivered to the cathode-ray tube at the moment when these images are displayed. This prediction is then used in a step 12 to predict the distortions that will affect these images at the moment when they are displayed. These distortions then serve to determine, during a step 13, the reverse distortions and to apply them to the source images.

**Claims**

1. Method of processing a sequence of video images to be displayed with a cathode-ray tube display device, which method is intended for correcting the distortions created by the high-voltage supply circuit of the display device and comprises the following steps :

   - characterization (11) of the distortions created by the high-voltage supply circuit of the display device; and
   - for each image of the sequence to be displayed, determination (12) of the distortions affecting it and generation (13) of a precorrected image having the reverse distortions,

   **characterized in that** a model for characterizing the distortions created by the high-voltage supply circuit is defined, said model being capable of delivering, as a function of the video signal (R,G,B) of the images to be displayed, a signal (VHV(t)) representative of the variations in the output voltage of the high-voltage supply circuit while these images are being displayed.

2. Method according to Claim 1, **characterized in that** said signal representative of the variations in the output voltage of the high-voltage supply circuit have a low-frequency component (VHV_DC) and a high-frequency component (VHV_AC).

3. Method according to Claim 2, **characterized in that** said low-frequency component (VHV_DC) is calculated from a grid voltage (G2) intended to bias a grid of the cathode-ray tube gun.

4. Method according to Claim 2, **characterized in that** said low-frequency component (VHV_DC) is calculated from a beam signal (V_info_beam) representative of the cathode-ray tube beam current.

5. Method according to Claim 3 or 4, **characterized in that** said low-frequency component (VHV_DC) is a second-order polynomial of said grid voltage (G2) or of said beam signal (V_info_beam).

6. Method according to one of Claims 2 to 5, **characterized in that**, to calculate the high-frequency component (VHV_AC), the following steps are carried out:

   - the charge current ($i_c$) and the discharge current ($i_d$) of the capacitor of the cathode-ray tube of the display device for each image line are defined by modelling; and
   - said high-frequency component (VHV_AC) is calculated by summing, for each line, the voltages obtained by integrating the charge current ($i_c$) and the discharge current ($i_d$).

7. Method according to Claim 6, **characterized in that** the charge current ($i_c$) and the discharge current ($i_d$) are modelled on the basis of the video image signal and of said grid voltage (G2) for said images.

8. Method according to Claim 6, **characterized in that** the charge current ($i_c$) is measured by a resistor in the base of the cathode-ray tube while the capacitor of the tube is being charged up and the discharge current ($i_d$) is modelled on the basis of the video image signal and of said grid voltage (G2) for said images.

FIG.1

10

Vcc

line flyback
voltage

VHV(t)

D5

L5

D4

G3

L4

D3

G2

L3

D2

L2

D1

L1

R1

C1

V_info_beam

FIG.2

$R_c$

$id(t) = f(R,G,B,G2)$

$C_{tube}$

FIG.3

FIG.4

VHV_AC(t)

VHV_DC(t)

$\varepsilon(t)$

FIG.5

source
images

prediction of the
cathode-ray tube
voltage VHV

11

determination of the
distortion caused by
the variations in the
VHV

12

FIG.6

application of reverse
distortion

13

images to be
displayed

**EP 1 679 676 A1**

<table>
<tr><td colspan="5" align="center">**European Patent Office**     **EUROPEAN SEARCH REPORT**</td><td>**Application Number**<br>EP 05 11 2014</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 845 238 A (THOMSON LICENSING S.A; DEUTSCHE THOMSON BRANDT GMBH) 2 April 2004 (2004-04-02) * abstract * * page 3, lines 1-12 * * page 7, line 21 - page 9, line 20 * ----- | 1 | G09G1/04 H04N3/233 |
| A | PATENT ABSTRACTS OF JAPAN vol. 1998, no. 08, 30 June 1998 (1998-06-30) & JP 10 070672 A (TOSHIBA CORP; TOSHIBA AVE CORP), 10 March 1998 (1998-03-10) * abstract * ----- | 1-8 | |
| A | US 3 723 805 A (SCARPINO T,US ET AL) 27 March 1973 (1973-03-27) * abstract * * column 1, lines 10-26 * * sentences 19-32 * ----- | 1-8 | |
| | | | TECHNICAL FIELDS SEARCHED (IPC) |
| | | | G09G H04N |

The present search report has been drawn up for all claims

| Place of search | Date of completion of the search | Examiner |
|---|---|---|
| Munich | 19 January 2006 | Fulcheri, A |

EPO FORM 1503 03.82 (P04C01)

**ANNEX TO THE EUROPEAN SEARCH REPORT
ON EUROPEAN PATENT APPLICATION NO.**                EP 05 11 2014

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2006

| Patent document cited in search report | | Publication date | Patent family member(s) | | Publication date |
|---|---|---|---|---|---|
| FR 2845238 | A | 02-04-2004 | CN<br>EP<br>US | 1497944 A<br>1408682 A1<br>2005057540 A1 | 19-05-2004<br>14-04-2004<br>17-03-2005 |
| JP 10070672 | A | 10-03-1998 | NONE | | |
| US 3723805 | A | 27-03-1973 | NONE | | |

EPO FORM P0459

For more details about this annex : see Official Journal of the European Patent Office, No. 12/82